Europäisches Patentamt

European Patent Office

Office européen des brevets

(11) Publication number : **0 652 670 A1**

# (12) EUROPEAN PATENT APPLICATION

(21) Application number : **94308149.7**

(22) Date of filing : **04.11.94**

(51) Int. Cl.$^6$ : **H04N 1/419, H04N 1/413**

(30) Priority : **05.11.93 JP 301317/93**

(43) Date of publication of application :
**10.05.95 Bulletin 95/19**

(84) Designated Contracting States :
**DE FR GB IT NL**

(71) Applicant : **CANON KABUSHIKI KAISHA**
**30-2, 3-chome, Shimomaruko,**
**Ohta-ku**
**Tokyo (JP)**

(72) Inventor : **Kaizu, Shunichi, c/o CANON**
**KABUSHIKI KAISHA**
**30-2, 3-chome Shimomaruko**
**Ohta-ku, Tokyo (JP)**
Inventor : **Minami, Yuji, c/o CANON**
**KABUSHIKI KAISHA**
**30-2, 3-chome Shimomaruko**
**Ohta-ku, Tokyo (JP)**

(74) Representative : **Beresford, Keith Denis Lewis**
**et al**
**BERESFORD & Co.**
**2-5 Warwick Court**
**High Holborn**
**London WC1R 5DJ (GB)**

(54) **Image encoding apparatus and method.**

(57)    An image encoding apparatus comprises a counter for counting a run length of an input pixel signal, an encoder for outputting a code corresponding to the count of the counter, and a decompressor for decompressing the compressed code outputted from the encoder. The encoder outputs a compressed code having a data width of N bits (N = M + L) with M high order bits representing a code length of an original code and L low order bits representing a compressed code representing L low order bits of the original code. When the code length of the original code is less than L bits, the encoder outputs the compressed code with the original code being placed in the high order bits starting from the high order end and 0 bits being filled in the remaining low order bits.

FIG. 1

EP 0 652 670 A1

## BACKGROUND OF THE INVENTION

### Field of the Invention

The present invention relates to image encoding apparatus and method by the modified Huffman (MH), the modified READ (MR) and the modified READ (MMR) encoding systems, and more particularly to image encoding apparatus and method which perform real time processing.

### Related Background Art

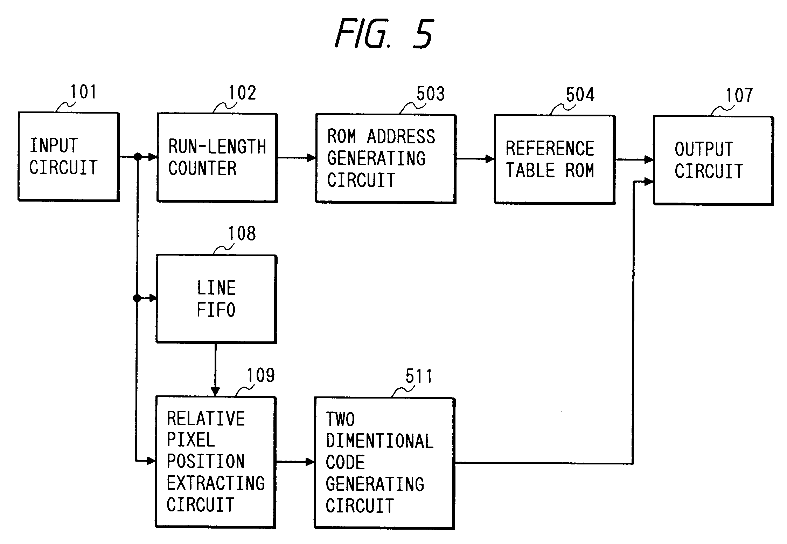

Fig. 5 shows a block diagram of a prior art image encoding apparatus by the MH, MR and MMR systems.

For one-dimension encoding, a pixel signal passed through an input circuit 101 is supplied to a run length counter 102. The number of continuous white or black pixels (run length) is counted by the run length counter 102. A ROM address generation circuit 503 generates an address for accessing a reference table ROM 504 based on the count (run length) of the run length counter 102. MH codes for the run lengths are written in the reference table ROM 504 and an output therefrom is outputted as an encoded code through an output circuit 107.

On the other hand, for two-dimension encoding, the pixel signal passed through the input circuit 101 is supplied to a line FIFO 108 and a relative pixel position extract circuit 109. The line FIFO is provided to refer data of previous line to the currently scanned line in the two-dimension encoding, and the relative pixel position extract circuit 109 refers the data stored in the line FIFO 108 to extract a relative position of a pixel color change point of the currently scanned line and that of the previous line. In accordance with the result of the relative pixel position extract circuit 109, a two-dimension code generation circuit 511 generates a code so that the encoded code is outputted through the output circuit 107.

The above MH code is a variable length code. For example, a shortest length code is a 2-bit code such as "11" corresponding to a black pixel having a run length of 2 while a longest length code is 13-bit code such as "0000001101100" corresponding to a black pixel having a run length of 512.

In addition to those codes, when the MH code is applied to the MR code or the MMR code, a color identification code and an encoding mode identification bit are required. Further, in a packing process in the output unit, it may be necessary to conduct a code shift process by using the code length of the MH code resulting from the encoding. Considering these situations, 19 or 20 bits are required for the data length of the data outputted by encoding the run length.

Thus, the ROM for processing such variable length code is of large scale.

On the other hand, in the two-dimension encoding, for example, in the MR or MMR encoding, when the generation of the code of pass mode, vertical mode or non-compression mode is to be conducted on real time basis, a circuit for generating a code for each mode is required and many conditional branches for the generation of the code are included. Accordingly, the circuit is complex and the circuit scale increases.

Further, the encoding in the MR system horizontal mode involves the following problem. Namely, the encoding in the MR system horizontal mode is conducted in a format in which a MH code corresponding to a run length of the currently scanned pixels follows to a code "001" representing the horizontal mode, and a MH code corresponding to a run length of the next color pixels follows thereto.

For example, it is assumed that the currently scanned pixels are white, they are in the horizontal mode and the run length is 3. It is further assumed that the succeeding black pixels have a run length of 2. The MH code corresponding to the white pixels of the run length 3 is "1000" and the MH code corresponding to the black pixels of the run length 2 is "11". Thus, the code under the assumption is represented as follows.

$$\text{"001"} + \text{MH (white 3)} + \text{MH (black 2)} = \text{"001100011"}$$

In this manner, in the encoding in the MR system horizontal mode, three codes should be generated for two run lengths, which causes a problem in the real time processing. When a code "001" representing the horizontal mode is added, the code length is increased three bits more.

## SUMMARY OF THE INVENTION

It is a concern of the present invention to provide image encoding apparatus and method which can efficiently handle a variable length code with a small scale circuit configuration.

It is another concern of the present invention to provide image encoding apparatus and method which can reduce a structure of a table used to convert a run length code to a variable length code and which are simple in construction.

An image encoding apparatus of the present invention comprises counter means for counting a run length of an input pixel signal, encoding means for outputting a code corresponding to the count of said counter means, said encoding means outputting a compressed code having a data width of N bits (N = M + L) with M high order bits representing a code length of an original code and L low order bits representing a compressed code representing L low order bits of the original code, and decompression means for decompressing the compressed code outputted from said encoding means.

An image encoding method of the present invention comprises the steps of counting a run length of an input pixel signal, encoding a code corresponding to the counted run length to output a compressed code having a data width of N bits (N = M + L) with M high order bits representing a code length of an original code and L low order bits representing L low order bits of the original code, and decompressing the outputted compressed code to the original code.

The above concerns and advantages as well as other objects and advantages will be apparent from the following description of the invention.

BRIEF DESCRIPTION OF THE DRAWINGS

Fig. 1 shows a block diagram of a configuration of one embodiment of an image encoding apparatus of the present invention,
Fig. 2 shows a block diagram of a configuration of a reference table ROM, a ROM data decompression circuit and a horizontal mode encoding circuit of the embodiment,
Fig. 3 illustrates an example of a memory map of the reference table ROM in the embodiment,
Fig. 4 illustrates an example of ROM data of the reference table ROM of the embodiment, and
Fig. 5 shows a block diagram of a prior art image encoding apparatus.

DETAILED DESCRIPTION OF THE PREFERRED EMBODIMENTS

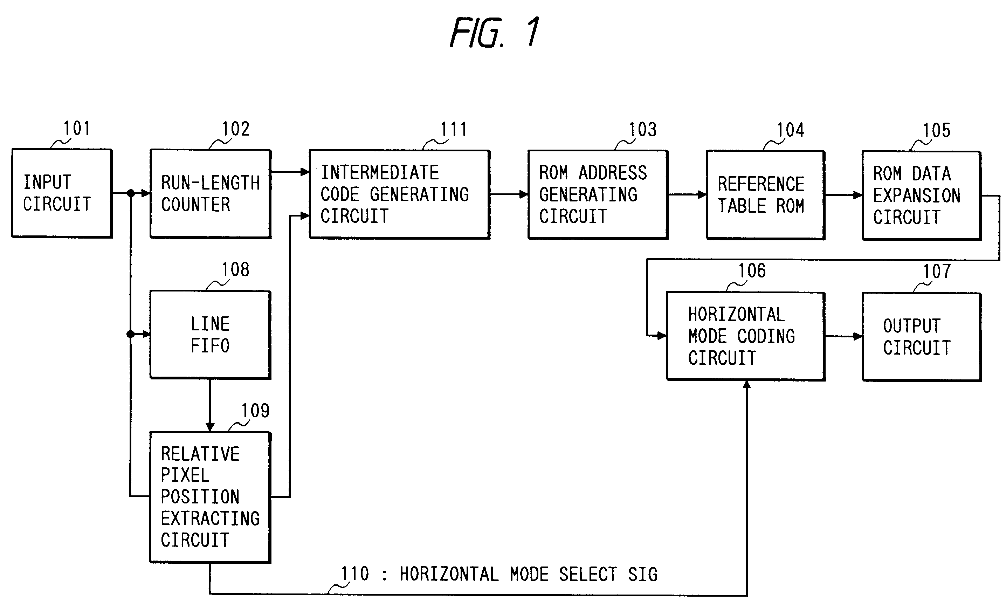

Fig. 1 shows a block diagram of a configuration of one embodiment of the image encoding apparatus of the present invention.

Numeral 101 denotes an input circuit such as an image reader which has an image pickup device such as a CCD and photo-electrically reads an image and outputs a pixel signal for each line, numeral 102 denotes a run length counter for counting the number of continuous white or black pixels (run length) based on the pixel signal from the input circuit 101, numeral 108 denotes a line FIFO (first-in first-out memory) for holding at least one line of pixel signals from the input circuit 101 as a reference line for two-dimension encoding, and numeral 109 denotes a relative pixel position-extract circuit for extracting a relative position relationship of a change point of a pixel signal of one line before held in the line FIFO and a change point of a pixel signal of the line currently inputted from the input circuit 101 to determine an encoding mode in the two-dimension encoding.

Numeral 111 denotes an intermediate code generation circuit for generating an intermediate code based on the outputs of the run length counter 102 and the relative pixel position extract circuit 109, numeral 103 denotes a ROM address generation circuit for outputting data for addressing a succeeding stage reference table ROM in accordance with the intermediate code from the intermediate code generation circuit 111, and numeral 104 denotes a reference table ROM for outputting an MH code or an MR code by using the data from the ROM address generation circuit 103 as an address.

The reference table ROM 104 does not output the code such as the MH code or the MR code as it is but outputs it in a form compressed to 12 bits as will be described later.

Numeral 105 denotes a ROM data decompression circuit for decompressing the code outputted from the reference table ROM 104 in the compressed form to a normal code, and numeral 106 denotes a horizontal mode encoding circuit for adding a code "001" representing the horizontal mode when the code outputted from the ROM data decompression circuit 105 is a code representing the first run length of the horizontal mode in the two-dimension encoding (MR or MMR encoding).

Numeral 107 denotes an output circuit for outputting the code derived through the horizontal mode encoding circuit 106 to a remote place through a telpehone line or outputting it to an image file having a magneto-optical disk.

The intermediate code generation circuit 111 is now explained.

The intermediate code generation circuit 111 generates an intermediate code for accessing the ROM address generation circuit 103 based on the outputs of the run length counter 102 and the relative pixel position extract circuit 109.

The intermediate code is of 18-bit width and has the following format.

3

| Bit Position | Content | |
|---|---|---|
| Bits 17 to 15 | Encoding Mode and Color Information | |
| Bits 14 to 0 | One-Dimension Encoding Mode or Two-Dimension Encoding Horizontal Mode | Run Length |
| | Two-Dimension Encoding Vertical Mode | Vertical Mode Attributes |
| | Two-Dimension Encoding Pass Mode | All Zeros |
| | End of Line (EOL) Code or End of Page Code (RTC) Output | EOL Attributes, Number of EOL's |

In the above format, in the one-dimension encoding mode or the two-dimension encoding horizontal mode, the count is indicated in the following distribution when the bits 14 to 0 represent the run length.

| Bits 14 to 12 | Extension Make-up Encoding Count |
|---|---|
| Bits 11 to 6 | Make-up Encoding Count |
| Bits 5 to 0 | Terminating Encoding Count |

The intermediate code generation circuit 111 comprises a plurality of selectors to which the run length count from the run length counter 102 and the code attributes from the relative pixel position extract circuit 109 are supplied, and outputs the intermediate code of the above format to the ROM address generation circuit 103 by activating the respective selectors by the encoding mode signal from the relative pixel position extract circuit 109.

The ROM address generation circuit 103 is now explained.

The above intermediate code is supplied to the ROM address generation circuit 103 from the intermediate code generation circuit 111. A plurality of selectors for selecting in accordance with the three high order bits (bits 17 to 15) of the input intermediate code are provided in the ROM address generation circuit 103, and the 15 low order bits (bits 14 to 0) of the intermediate code are supplied to the selectors.

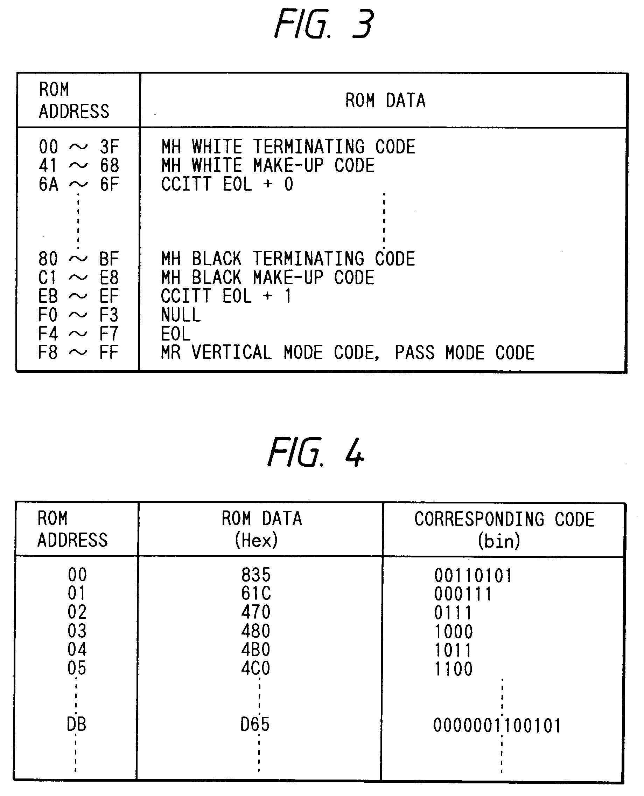

Accordingly, the 8-bit data of the 15 low order bits of the intermediate code is selected in accordance with the encoding mode and the color information represented by the 3 high order bits of the intermediate code and outputted as a ROM address (see Fig. 3).

A portion of the data input units of the selectors is fixed to a high level or a low level to generate a required ROM address.

The reference table ROM 104 is now explained.

As described above, the 8-bit address is supplied to the reference table ROM 104 from the ROM address generation circuit 103. The code compressed to 12-bit is outputted from the reference table ROM 104.

Namely, the output data width of the reference table ROM is of 12-bit width, of which 4 high order bits represent the code length of the original code and 8 low order bits represent the 8 low order bits of the original code data. When the original code data length is less than 8 bits, the 8 low order bits comprise the original code data set from the high order end and "0" bits at the remaining positions.

For example, the MH code "0000001100101" corresponding to a black pixel having the run length 1728 has the code length of 13 bits and the 8 low order bits of the code are "01100101". Thus, when it is compressed in the manner described above, it is 1101 0110 0101$_{(bin)}$ = D65$_{(hex)}$.

On the other hand, the MH code "000111" corresponding to a white pixel having the run length 1 has the code length of 6 bits. In this case, since the code lengths is 6 bits which is less than 8 bits, it is compressed in accordance with the compression method described above such that the 8 low order bits of the compressed data is "00011100". Thus, the compressed data is 0110 0001 1100$_{(bin)}$ = 61C$_{(hex)}$.

By the compression method described above, the variable length data of up to 13 bits can be efficiently compressed and an area of the ROM chip can be reduced when the code is stored in the ROM.

The MR system vertical mode and pass mode code and the EOL and non-compression mode codes are also compressed by the above compression method. Thus, the two-dimension code generation circuit which heretofore has been complex and large in circuit scale can be significantly reduced in scale.

Fig. 3 shows an example of a memory map of the reference table ROM 104. As seen from Fig. 3, a white run length terminating code corresponding to the addresses 00 to 3F$_{(hex)}$, a white run length make-up code

4

corresponding to the addresses 41 to 68$_{(hex)}$, a black run length terminating code corresponding to the addresses 80 to BF$_{(hex)}$, and a black run length make-up code corresponding to the addresses C1 to E8$_{(hex)}$ are written in the compressed form described above.

Similarly, the non-compression mode code, the end of line code (EOL), the MR or MMR encoding vertical mode code and the pass mode code are written in the compressed mode to correspond to the resptctive addresses.

Fig. 4 shows a relationship between the 12-bit data (ROM data) written to correspond to the addresses (ROM addresses) in the reference table ROM 104 and the actual codes.

In the present embodiment, the variable length code of up to 13 bits is compressed to the 12-bit code although the present invention is not limited to the specific code length but the code length may be appropriately selected in accordance with the coding architecture and the code length and the data length adopted in the processing system.

Namely, the data width is N bits, of which M high order bits represent the original code length and the L low order bits represent the L low order bits of the original code, and when the original code length is less than L bits, the L low order bits comprise the original code data placed from the high order end with 0's being filled in the remaining positions so that other variable length data can be efficiently compressed whether they are MH, MR or MMR code, and the area of the ROM chip can be reduced when the code is stored in the ROM.

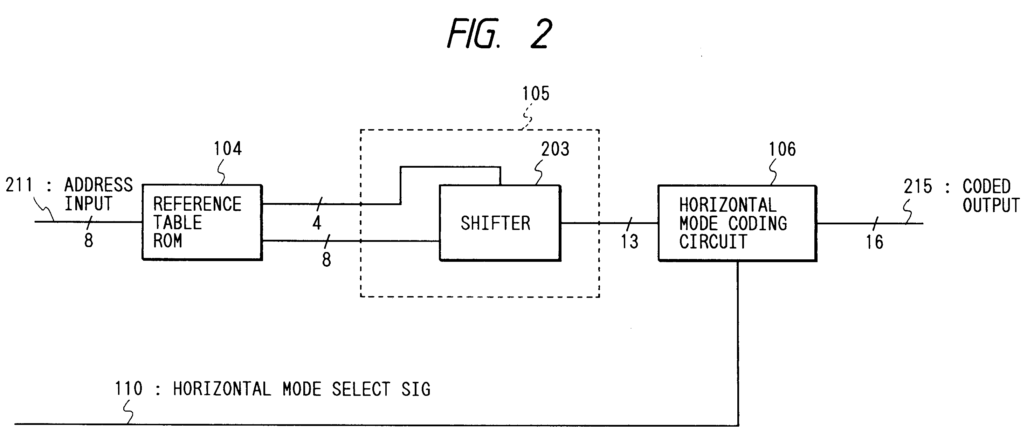

Fig. 2 shows a block diagram of a configuration of the reference table ROM 104, the ROM data decompression circuit 105 and the horizontal mode encoding circuit 106.

The reference table ROM 104 receives the address input signal 211 of 8-bit width from the ROM address generation circuit 103 as the ROM address and outputs the code data compressed to 12-bit width. As described above, the 4 high order bits of the compressed code data represent the code length of the original code and the 8 low order bits comprise the 8 low order bits of the code data having the code length of 9 bits or more, or the code data having the code length of 8 bits or less with the bits being placed from the high order end.

The output of the reference table ROM 104 is supplied to a shifter 203 in the ROM data decompression circuit 105. In the shifter 203, the 8 low order bits are shifted by the amount indicated by the 4 high order bits of the input data so that the data compressed to 12 bits is decompressed to the original code. The shifter 203 decompresses assuming that the input data is of 13-bit width, but if the original code length is less than 13 bits, the compressed data is placed from the high order end with the remaining low order bit positions being filled with 0's.

When the horizontal mode encoding circuit 106 encodes in the horizontal mode in the MR or MMR encoding, it outputs code data of 16-bit width having "001" representing the horizontal mode in the 3 high order bits and the output data of the shifter 203 in the 13 low order bits. In other than the horizontal mode, it outputs code data of 16-bit width having the output data of the shifter 203 in the 13 high order bits and all 0's in the 3 low order bits. The operation mode of the horizontal mode encoding circuit 106 is determined by the horizontal mode selection signal 110, and the horizontal mode selection signal 110 is determined by the extraction result of the relative pixel position extract circuit 109.

Accordingly, the code output 215 from the horizontal mode encoding circuit 106 comprise the code data placed from the high order end with the remaining low order bits being filled with 0's.

The code output from the horizontal mode encoding circuit 106 is supplied to the output circuit 107 of Fig. 1. The output circuit 107 takes only the effective bits of the code output 215 as a true code data and neglects the remaining low order bits. The bit width of the effective bits is K high order bits (where k is the code length) in other than the horizontal mode, and K + 3 high order bits in the horizontal mode. Since the code length is represented by the 4 high order bits of the output data of the reference table ROM 104, the output circuit 107 determines the effective bits by using the data indicated by the code length.

An operation of the image encoding apparatus of Fig. 1 is now explained.

In the one-dimension encoding, the pixel signal passed through the input circuit 101 is supplied to the run length counter 102. The number of continuous white or black pixels (run length) is counted by the run length counter 102.

In the one-dimension encoding (for example, MH encoding), since the relative position relation between the current line pixel and the previous line pixel is not required, the intermediate code generation circuit 111 generates the intermediate code representing the run length by the 15 low order bits in accordance with the count of the run length counter 102. The 3 high order bits of the intermediate code represent the one-dimension encoding mode and the color information. The ROM address generation circuit 103 generates the address to access the reference table ROM 104 in accordance with the intermediate code from the intermediate code generation circuit 111.

The reference table ROM 104 outputs the terminating code or the make-up code compressed to 12 bits in the manner described above in accordance with the ROM address from the ROM address generation circuit

EP 0 652 670 A1

103.

The ROM data decompression circuit 105 decompresses the compressed ROM output data to the MH code so that the encoded code is outputted through the output circuit 107. In the MH encoding, the horizontal mode encoding circuit 106 is not activated and the MH code outputted by the ROM data decompression circuit 105 is directly outputted to the output circuit 107.

On the other hand, in the two-dimension encoding, the pixel signal passed through the input circuit 101 is supplied to the line FIFO 108 and the relative pixel position extract circuit 109, along with the output of the run length counter 102. The relative pixel position extract circuit 109 refers the pixel data of the previous line stored in the line FIFO 108 to extract the relative position of the previous line and the current line as to the pixel color change point.

It determines the mode of the two-dimension encoding, that is, the horizontal mode, the vertical mode or the pass mode in accordance with the extracted relative position, and the determination result is outputted to the intermediate code generation circuit 111 as the code attributes. If the horizontal mode is determined, the horizontal mode selection signal 110 is outputted to the horizontal mode encoding circuit 106.

The intermediate code generation circuit 111 generates the intermediate code which sets the encoding mode and the color information in the 3 high order bits and the run length or the vertical mode attributes, or all zeros in the 15 low order bits in accordance with the code attributes from the relative pixel position extract circuit 109 and the run length from the run length counter 102.

The ROM address generation circuit 103 generates the address to access the reference table ROM 104 in accordance with the intermediate code from the intermediate code generation circuit 111.

The reference table ROM outputs the terminating code, the make-up code, the vertical mode code or the pass mode code compressed to 12 bits in the manner described above in accordance with the ROM address from the ROM address generation circuit 103.

The ROM data decompression circuit 105 decompresses the compressed output data of the reference table ROM 104 and outputs the encoded code through the output circuit 107.

In the horizontal mode, the horizontal mode encoding circuit 106 adds the code "001" indicating the horizontal mode to the output data (the code indicating the run (length) from the ROM data decompression circuit 105, and outputs it through the output circuit 107.

In accordance with the code compression method of the present invention, the variable length data such as the MH code can be efficiently compressed, and the area of the ROM chip can be reduced when the code is stored in the ROM. By storing the vertical mode and pass mode codes in the MR or MMR encoding and the EOL and non-compression mode code in the ROM, the circuit scale can be reduced and the processing can be simplified.

By using the horizontal mode encoding circuit, the horizontal mode encoding in the MR or MMR encoding can be conducted on the real time basis without increasing the data width of the ROM data.

While the preferred embodiments of the present invention have been described and shown, it should be understood that the present invention is not limited thereto and various changes and modifications can be made without departing from the scope of claims.

## Claims

1. An image encoding apparatus comprising:

    counter means for counting a run length of an input pixel signal;

    encoding means for outputting a code corresponding to the count of said counter means;

    said encoding means outputting a compressed code having a data width of N bits (N = M + L) with M high order bits representing a code length of an original code and L low order bits representing a compressed code representing L low order bits of the original code; and

    decompression means for decompressing the compressed code outputted from said encoding means.

2. An image encoding apparatus according to Claim 1, wherein when the code length of the original code is less than L bits, said encoding means outputs the compressed code with the original code being placed in the high order bits starting from the high order end and 0 bits being filled in the remaining low order bits.

3. An image encoding apparatus according to Claim 1, wherein said decompression means decompresses the compressed code to the original code by shifting the L low order bits data in accordance with the code

6

length represented by the M high order bits of the compressed code.

4.  An image encoding apparatus according to Claim 1, wherein said encoding means includes a table for outputting the N-bit compressed code in accordance with the address based on the count of said counter means.

5.  An image encoding apparatus according to Claim 1, further comprising determination means for determining a relative pixel position in a current line and a previous line, wherein said encoding means outputs a compressed two-dimension code in accordance with a determination result of said determination means.

6.  An encoding method comprising the steps of:
    counting a run length of an input pixel signal;
    encoding a code corresponding to the counted run length to output a compressed code having a data width of N bits (N = M + L) with M high order bits representing a code length of an original code and L low order bits representing L low order bits of the original code; and
    decompressing the outputted compressed code to the original code.

7.  An encoding method according to Claim 6, wherein when the code length of the original code is less than L bits, said encoding step outputting the compressed code with the original code being placed in the L low order bits starting from the high order end and 0 bits being filled in the remaining low order bits.

8.  Apparatus for encoding image data comprising means for encoding an input pixel signal in accordance with its run length, and means for generating compressed code from the lower order bits of the encoded signal.

# FIG. 1

101 INPUT CIRCUIT → 102 RUN-LENGTH COUNTER → 111 INTERMEDIATE CODE GENERATING CIRCUIT → 103 ROM ADDRESS GENERATING CIRCUIT → 104 REFERENCE TABLE ROM → 105 ROM DATA EXPANSION CIRCUIT

108 LINE FIFO

109 RELATIVE PIXEL POSITION EXTRACTING CIRCUIT

106 HORIZONTAL MODE CODING CIRCUIT → 107 OUTPUT CIRCUIT

110 : HORIZONTAL MODE SELECT SIG

EP 0 652 670 A1

## FIG. 2

211 : ADDRESS INPUT

REFERENCE TABLE ROM  104

8

4

8

105

SHIFTER  203

13

HORIZONTAL MODE CODING CIRCUIT  106

16

215 : CODED OUTPUT

110 : HORIZONTAL MODE SELECT SIG

EP 0 652 670 A1

## FIG. 3

| ROM ADDRESS | ROM DATA |
|---|---|
| 00 ~ 3F | MH WHITE TERMINATING CODE |
| 41 ~ 68 | MH WHITE MAKE-UP CODE |
| 6A ~ 6F | CCITT EOL + 0 |
| 80 ~ BF | MH BLACK TERMINATING CODE |
| C1 ~ E8 | MH BLACK MAKE-UP CODE |
| EB ~ EF | CCITT EOL + 1 |
| F0 ~ F3 | NULL |
| F4 ~ F7 | EOL |
| F8 ~ FF | MR VERTICAL MODE CODE, PASS MODE CODE |

## FIG. 4

| ROM ADDRESS | ROM DATA (Hex) | CORRESPONDING CODE (bin) |
|---|---|---|
| 00 | 835 | 00110101 |
| 01 | 61C | 000111 |
| 02 | 470 | 0111 |
| 03 | 480 | 1000 |
| 04 | 4B0 | 1011 |
| 05 | 4C0 | 1100 |
| DB | D65 | 0000001100101 |

## FIG. 5

```
   ┌─────────┐    ┌─────────┐    ┌───────────┐    ┌───────────┐    ┌─────────┐
   │  101    │    │  102    │    │   503     │    │   504     │    │  107    │
   │ INPUT   │    │RUN-LENGTH│   │ROM ADDRESS│    │REFERENCE  │    │ OUTPUT  │
   │ CIRCUIT │───►│ COUNTER  │──►│GENERATING │──► │TABLE ROM  │──► │ CIRCUIT │
   │         │    │          │   │ CIRCUIT   │    │           │    │         │
   └─────────┘    └─────────┘    └───────────┘    └───────────┘    └─────────┘
```

108 — LINE FIFO

109 — RELATIVE PIXEL POSITION EXTRACTING CIRCUIT

511 — TWO DIMENTIONAL CODE GENERATING CIRCUIT

EP 0 652 670 A1

# EP 0 652 670 A1

## European Patent Office

## EUROPEAN SEARCH REPORT

Application Number

EP 94 30 8149

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US-A-4 811 113 (OZEKI ET AL) <br> * abstract * <br> --- | 1-8 | H04N1/419 <br> H04N1/413 |
| A | PATENT ABSTRACTS OF JAPAN <br> vol. 17, no. 421 (E-1409) 5 August 1993 <br> & JP-A-05 083 575 (KONICA CORP) 2 April 1993 <br> * abstract * <br> ----- | 1-8 | |

TECHNICAL FIELDS
SEARCHED     (Int.Cl.6)

H04N

The present search report has been drawn up for all claims

| Place of search | Date of completion of the search | Examiner |
|---|---|---|
| THE HAGUE | 10 February 1995 | Isa, S |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

12